# EUROPÄISCHE PATENTANMELDUNG

(11) **EP 3 349 350 A1**
(43) Veröffentlichungstag der Anmeldung: **18.07.2018**
(21) Anmeldenummer: 17150921.9
(22) Anmeldetag: 11.01.2017
(51) Int. Cl.: H02P 9/00, H02P 9/42

(54) **VERFAHREN ZUM BETREIBEN EINER ASYNCHRONMASCHINE IM GENERATORBETRIEB**

(71) Anmelder: Siemens Aktiengesellschaft, 80333 München (DE)
(72) Erfinder: Rosendahl, Jens, 59071 Hamm (DE); Sievert, Roland, 47199 Duisburg (DE)

(57) **Zusammenfassung**

Die Erfindung betrifft ein Verfahren zum Betreiben einer Asynchronmaschine (2) im Generatorbetrieb zum Einspeisen elektrischer Energie in ein erstes Netz (9a) mit einer ersten Frequenz und in ein zweites Netz (9b) mit einer zweiten Frequenz, wobei die erste Frequenz größer als die zweite Frequenz ist, und wobei die Asynchronmaschine (2) doppelt gespeist unter Verwendung eines Zweiquadranten-Umrichters (10) betrieben wird.

## Beschreibung

Die Erfindung betrifft ein Verfahren zum Betreiben einer Asynchronmaschine im Generatorbetrieb.

Anlagen zur Erzeugung elektrischer Energie, die z.B. mit Turbinen angetrieben werden, sind bei größerer Nennleistung nahezu ausschließlich über Synchrongeneratoren (Turbogeneratoren) an das elektrische Versorgungs- oder Verteilnetz gekoppelt. Die Synchronmaschine legt die mechanische Drehfrequenz auf diejenige der elektrischen Netzfrequenz oder einen ganzzahligen Teiler davon fest. Das führt dazu, dass in jeder Leistungsklasse je ein Antrieb, wie eine Turbine, für ein 60Hz- und für ein 50Hz-Netz zu entwickeln ist. Die feste mechanische Frequenz schränkt die Optimierung des Antriebs bezüglich Wirkungsgrad, Kosten und Leistung maßgeblich ein.

Bei höheren Leistungsklassen, bei welchen Getriebe nicht mehr wirtschaftlich einsetzbar sind, kann ein für ein 60Hz- oder 50Hz-Netz entwickelter Antrieb nur dann betrieben werden, wenn ein Vollumrichter mit teuren leistungselektronischen Halbleiterschaltern im Vierquadrantenbetrieb verwendet wird, bei dem ein Leistungsfluss in allen Quadranten des Blind- und Wirkleistungsdiagramms stattfindet.

Z.B. ist es aus der EP 1 834 404 B1 bekannt, eine von einem Antrieb angetriebene und doppelt gespeiste Asynchronmaschine als Generator zusammen mit einem Vierquadranten-Umrichter zu verwenden, um elektrischen Drehstrom veränderlicher Frequenz bereitzustellen. Jedoch sind derartige Vierquadranten-Umrichter aufwändig herzustellen.

Es besteht daher Bedarf daran, Wege aufzuzeigen, wie eine Asynchronmaschine als Generator mit weniger Aufwand in Netzen mit unterschiedlichen Frequenzen betrieben werden kann.

Erfindungsgemäß wird die Asynchronmaschine zum Einspeisen elektrischer Energie in ein erstes Netz mit einer ersten Frequenz und in ein zweites Netz mit einer zweiten Frequenz, wobei die erste Frequenz größer als die zweite Frequenz ist, doppelt gespeist unter Verwendung eines Zweiquadranten-Umrichters betrieben.

Unter einer Asynchronmaschine (Drehstrom-Induktionsmaschine) wird dabei eine Drehstrommaschine verstanden, deren Rotor einem Statordrehfeld als Generator vorläuft. Der Rotor ist passiv, d.h. er ist entweder ständig (Kurzschlussläufer, Käfigläufer) oder fallweise kurzgeschlossen (Schleifringläufer). Beim Einsatz als Generator wird der Rotor auch mit einer von einer Netzfrequenz abweichenden Frequenz erregt (doppelt gespeiste Asynchronmaschine). Die Asynchronmaschine im Generatorbetrieb kann Teil eines Turbosatzes sein. Unter einem Turbosatz wird eine Kombination von einem Generator und einem den Generator antreibenden Antrieb verstanden, die der Stromerzeugung dienen.

Der Zweiquadranten-Umrichter wandelt z.B. Drehstrom, z.B. einer Netzes, in das die Asynchronmaschine elektrische Energie einspeist, in z.B. Drehstrom einer anderen Frequenz um. Mit dem Zweiquadranten-Umrichter können je nach Betriebszustand zwei Stromrichtungen bewirkt werden. Die erste Stromrichtung ist von der Asynchronmaschine in Richtung Netz und die zweite Stromrichtung ist in Richtung Netz zu der Asynchronmaschine gerichtet.

Bei einem Zweiquadranten-Umrichter wird im Betrieb nur ein kleiner Teil (im obigen Beispiel ca. 20-21%) der Ausgangsscheinleistung über den Zweiquadranten-Umrichter transportiert. Daher ist der Zweiquadranten-Umrichter im Vergleich zu einem Vierquadranten-Umrichter effizienter. Der Zweiquadranten-Umrichter ist zudem deutlich günstiger herzustellen als ein Vierquadranten-Umrichter mit Schaltelementen auf beiden Seiten.

Dabei ist der Leistungsfluss auch bei den in elektrischen Netzen üblichen Schwankungsbereichen immer in Richtung des Rotors, daher ist hier ein Zweiquadranten-Umrichter mit Schaltelementen auf der Rotor- und einem Gleichrichter auf der Netz-/Statorseite ausreichend.

Ferner kann so eine statt zweier Produktlinien von Gas- und Dampfturbinen optimiert werden. Im konkreten Fall großer fossiler Kraftwerke ist die 50Hz Antrieb bei ähnlichen Kosten deutlich effizienter und Leistungsstärker als die verfügbare 60Hz Antrieb. Ohne weitere Optimierung der großen Gas- und Dampfturbinen ließe sich die bestehende Lücke zur Konkurrenz im 60 Hz Markt durch die günstigere Auslegung eines solchen Systems schließen.

Bevorzugt wird die Asynchronmaschine untersynchron betreiben, wenn die Asynchronmaschine elektrische Energie in das zweite Netz einspeist. Mit anderen Worten, die Asynchronmaschine wird untersynchron beim Einspeisen in das zweiet Netz oder maximal synchron bei Einspeisen in das erste Netz betrieben. Somit wird die Asynchronmaschine und gegebenenfalls der die Asynchronmaschine antreibende Antrieb mit einer Drehzahl unterhalb ihrer Nenndrehzahl betrieben.

Bevorzugt ist der Zweiquadranten-Umrichter als indirekter Umrichter ausgebildet. Durch die Ausbildung des Zweiquadranten-Umrichters als indirektem Umrichter wird eine Entkopplung des Ausganges vom Eingang über den Zwischenkreis und deren Induktivität erreicht.

Bevorzugt ist der Zweiquadranten-Umrichter als Current-Source-Inverter ausgebildet. So kann besonders einfach der Zweiquadranten-Umrichter für große Leistungen ausgelegt werden.

Ferner gehören zur Erfindung eine derartigen Asynchronmaschine und ein Turbosatz mit einer derartigen Asynchronmaschine.

Im Folgenden wird eine bevorzugte Ausführungsform des erfindungsgemäßen Verfahrens anhand der beigefügten schematischen Zeichnungen erläutert. Es zeigt:

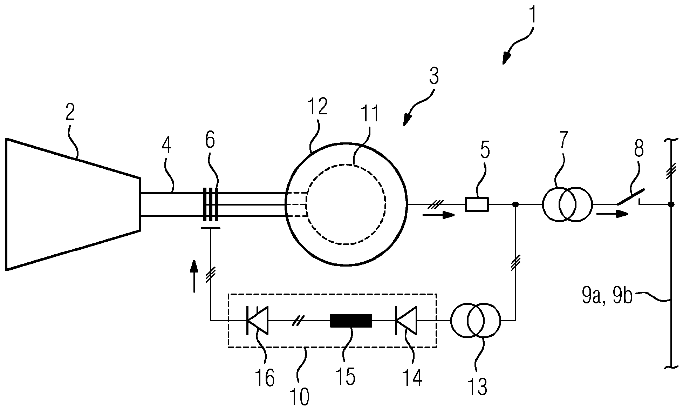

- Fig. 1: eine schematische Darstellung eines Ausführungsbeispiels der Asynchronmaschine.

Dargestellt ist ein Turbosatz 1 mit einem Antrieb 2 und einer Asynchronmaschine 3 im Generatorbetrieb, wobei im Betrieb der Antrieb 2 über eine Welle 4 die Asynchronmaschine 3 antreibt.

Der Antrieb 2 ist im vorliegenden Ausführungsbeispiel eine Turbine einer Gas- oder Dampfturbine eines Gas- oder Dampfkraftwerks.

Die Asynchronmaschine 3 weist einen Rotor 11 und einen Stator 12 auf. Sowohl der Rotor 11 als auch der Stator 12 weisen im vorliegenden Ausführungsbeispiel je dreiphasige Wicklungen auf, die jeweils zweipolig ausgebildet sind.

Die Asynchronmaschine 3 ist als Schleifringmotor mit Schleifringen 6 ausgebildet. Somit sind die Wicklungen des Rotors 11 über Schleifringe 6 jeweils nach außen geführt.

Die Wicklungen des Stators 12 sind über eine im vorliegenden Ausführungsbeispiel dreiphasige Leitung über eine Schalter 5, einen Netztransformator 7 und einen Schalter 8 mit dem ebenfalls dreiphasigen Netz 9a, 9b verbunden.

Um die Asynchronmaschine 3 - wie später noch detailliert erläutert wird - auch doppelt gespeist betreiben zu können, so dass die Wicklungen des Rotors 11 mit einer von der Frequenz des Netzes 9a, 9b abweichenden Frequenz erregt werden, ist ein Zweiquadranten-Umrichter 10 vorgesehen.

Der Zweiquadranten-Umrichter 10 ist eingangsseitig im vorliegenden Ausführungsbeispiel über einen Transformator 13 und eine dreiphasige Leitung mit den Wicklungen des Stators 12 verbunden. Im vorliegenden Ausführungsbeispiel erfolgt hierzu ein Abgriff an einer Eingangsseite des Netztransformators 7. Mit anderen Worten, der Transformator 13 ist direkt mit den Wicklungen des Stators 12 verbunden.

Ausgangsseitig ist der Zweiquadranten-Umrichter 10 über eine im vorliegenden Ausführungsbeispiel dreiphasig ausgebildete Leitung mit den Schleifringen 6 verbunden. Somit können die Wicklungen des Rotors 11 mit einer elektrischen Spannung variabler Frequenz beaufschlagt werden, die vom Zweiquadranten-Umrichter 10 bereitgestellt wird.

Der Zweiquadranten-Umrichter 10 weist hierzu im vorliegenden Ausführungsbeispiel Dioden 14, Induktivitäten 15 und ansteuerbare Halbleiterschaltelemente 16, wie z.B. Thyristoren oder Bipolartransistoren mit isolierter Gate-Elektrode (IGBT), auf.

Der Zweiquadranten-Umrichter 10 ist im vorliegenden Ausführungsbeispiel als indirekter Umrichter ausgebildet, der mit einen mit Gleichspannung betriebenen Zwischenkreis aufweist und eine Kombination von Gleichrichter und Wechselrichter darstellt. Durch die Ausbildung des Zweiquadranten-Umrichters 10 als indirekter Umrichter wird eine Entkopplung des Ausganges vom Eingang über den Zwischenkreis und deren Induktivität 15 erreicht.

Die Dioden 14 bilden hierzu einen Gleichrichter, im vorliegenden Ausführungsbeispiel einen Dreiphasengleichrichter, die Induktivität 15 bildet den Zwischenkreis, wobei die Induktivität 15 als Energiespeicher wirkt, durch den bei konstanter Last konstanter Gleichstrom fließt, und die Halbleiterschaltelemente 16 bilden einen ausgangseitigen Wechselrichter. Somit kann der Zweiquadranten-Umrichter 10 auch als Current-Source-Inverter (CSI) angesehen werden.

Abweichend vom vorliegenden Ausführungsbeispiel kann der Zweiquadranten-Umrichter 10 auch als direkter Umrichter bzw. Matrix-Konverter ausgebildet sein, der keinen Gleichspannungszwischenkreis aufweist.

Der Zweiquadranten-Umrichter 10 ist dazu ausgebildet, die Asynchronmaschine 3 in den Quadranten einer Vierquadrantendiagramms zu betreiben, die einen Generatorbetrieb repräsentieren.

Der Antrieb 2 und auch die Asynchronmaschine 3 sind dazu ausgebildet mit einer Nenndrehzahl betrieben zu werden und elektrischen Strom, im vorliegenden Ausführungsbeispiel dreiphasigen Drehstrom, mit einer ersten Frequenz in ein erstes Netz 9a und mit einer zweiten Frequenz in ein zweites Netz 9b einzuspeisen. Im vorliegenden Ausführungsbeispiel beträgt die Nenndrehzahl 3600 min⁻¹, die erste Frequenz 60 Hz, während die zweite Frequenz 50 Hz beträgt.

Dabei ist die Nenndrehzahl die Drehzahl des Antriebs 2, oberhalb der ein wirtschaftlicher Betrieb nicht gegeben ist. Die erste Frequenz ist größer als die zweite Frequenz, der ein Betrieb mit einer Drehzahl von 3000 min⁻¹ entsprechen würde. Somit wird die Asynchronmaschine 3 untersynchron betrieben.

Abweichend vom vorliegenden Ausführungsbeispiel kann die Asynchronmaschine 3 vierpolig ausgebildet sein und auf einen synchronen Betrieb mit einer Frequenz von 30 Hz entsprechenden Drehzahl ausgelegt sein, während der als Turbine ausgebildete Antrieb 2 auf einen Betrieb mit einer Drehzahl ausgelegt ist, die einer Frequenz von 50 Hz entspricht.

Wenn die Asynchronmaschine 3 elektrischen Strom in das Netz 9b mit der zweiten Frequenz einspeist wird die Asynchronmaschine 2 mit dem Zweiquadranten-Umrichters 10 doppelt gespeist betrieben, d.h. die Wicklungen des Rotors 11 werden mit einer von der zweiten Frequenz abweichenden Frequenz erregt.

So kann eine Asynchronmaschine 3 als Generator mit weniger Aufwand in Netzen 9a, 9b mit unterschiedlichen Frequenzen mit weniger Aufwand betrieben werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer Asynchronmaschine (2) im Generatorbetrieb zum Einspeisen elektrischer Energie in ein erstes Netz (9a) mit einer ersten Frequenz und in ein zweites Netz (9b) mit einer zweiten Frequenz,
wobei die erste Frequenz größer als die zweite Frequenz ist, und wobei die Asynchronmaschine (2) doppelt gespeist unter Verwendung eines Zweiquadranten-Umrichters (10) betrieben wird.

2. Verfahren nach Anspruch 1,
wobei die Asynchronmaschine (2) untersynchron betreiben wird, wenn die Asynchronmaschine (3) elektrische Energie in das zweite Netz (9b) einspeist.

3. Verfahren nach Anspruch 1 oder 2,
wobei der Zweiquadranten-Umrichter (10) als indirekter Umrichter ausgebildet ist.

4. Verfahren nach Anspruch 1, 2 oder 3,
wobei der Zweiquadranten-Umrichter (10) als Current-Source-Inverter ausgebildet ist.

5. Asynchronmaschine (2),
mit der im Generatorbetrieb elektrischer Energie in ein erstes Netz (9a) mit einer ersten Frequenz und in ein zweites Netz (9b) mit einer zweiten Frequenz einspeisbar ist, wobei die erste Frequenz größer als die zweite Frequenz ist, und wobei die Asynchronmaschine (2) durch einen Zweiquadranten-Umrichter (10) doppelt gespeist betreibbar ist.

6. Asynchronmaschine (2) nach Anspruch 5,
wobei die Asynchronmaschine (2) untersynchron betreibbar ist, wenn die Asynchronmaschine (3) elektrische Energie in das zweite Netz (9b) einspeist.

7. Asynchronmaschine (2) nach Anspruch 5 oder 6,
wobei der Zweiquadranten-Umrichter (10) als indirekter Umrichter ausgebildet ist.

8. Asynchronmaschine (2) nach Anspruch 5, 6 oder 7,
wobei der Zweiquadranten-Umrichter (10) als Current-Source-Inverter ausgebildet ist.

9. Turbosatz (1),
mit einem Antrieb (2), der eine Asynchronmaschine nach einem der Ansprüche 5 bis 8 antreibt.
